# EUROPÄISCHE PATENTSCHRIFT

(11) **EP 0 457 144 B1**
(45) Veröffentlichungstag und Bekanntmachung des Hinweises auf die Patenterteilung: **02.11.1994**
(21) Anmeldenummer: 91107287.4
(22) Anmeldetag: 06.05.1991
(51) Int. Cl.: H01M 4/04, H01M 4/08, H01M 4/58, H01M 4/50

(54) **Vorrichtung und Verfahren zur Herstellung einer positiven Elektrode in Bandform für galvanische Elemente**
Method and device for producing a positive electrode in band form for galvanic cells
Procédé et appareil produisant une électrode positive en forme de bande pour des éléments galvaniques

(30) Priorität: 12.05.1990 DE 4015363
(43) Veröffentlichungstag der Anmeldung: 21.11.1991
(73) Patentinhaber: VARTA Batterie Aktiengesellschaft, D-30405 Hannover (DE)
(72) Erfinder: Ilic, Dejan, Dr., W-7090 Ellwangen (DE); Sauer, Hans, W-6270 Idstein-Walsdorf (DE); Neumann, Dirk, W-7080 Aalen (DE)
(74) Vertreter: Kaiser, Dieter Ralf, Dipl.-Ing.

(56) Entgegenhaltungen:
- US-A- 3 951 688
- US-A- 4 111 155
- US-A- 4 318 430
- US-A- 4 670 214

## Beschreibung

Die Erfindung betrifft ein Verfahren zur Herstellung einer positiven Elektrode in Bandform für Primär und Sekundärelemente, bei dem eine Trockenpulvermischung aus dem elektrochemisch aktiven Material und einem Bindemittel mittels Walzen auf ein Metallnetz oder Streckmetall als Stromkollektor aufgebracht wird.

Vorzugsweises Einsatzgebiet der nach dem neuen Verfahren hergestellten positiven Elektroden sind Wickelzellen mit flüssigem Elektrolyten auf der Grundlage von Systemen, die Li-Elektroden oder H₂-Elektroden als negative Gegenelektroden enthalten, also sowohl nichtwässrige als auch wässrige Systeme. Dabei sind in der Regel auch die Gegenelektroden gemeinsam mit der positiven Elektrode unter Zwischenlage eines Separators spiralig aufgerollt.

Die Wickeltechnik verlangt von den band- oder folienförmigen Elektroden vor allem eine hohe Flexibilität. Nach bisher üblicher Praxis werden Wickelelektroden in einem Naßverfahren, z. B. durch beidseitiges Aufstreichen einer Metalloxid-Paste auf ein gelochtes Metallband nach DE-OS 2 903 074, hergestellt. Die einzelnen Herstellungsschritte, beginnend mit dem Ansetzen der Paste und der Aufrechterhaltung einer geeigneten Viskosität und endend mit einem sorgfältigen Trockenprozeß, bei dem Rißbildungen in den anhaftenden Masseschichten vermieden werden müssen, erfordern erhebliche technische Aufwendungen.

Aus der DE-PS 1 496 289 ist aber auch ein Trockenverfahren bekannt, bei dem das pulverförmige aktive Material zwischen Walzen kontinuierlich in die Maschen eines Streckmetalls als Trägernetz eingepreßt wird. Die Füllung der Maschen erfolgt hier im Verdichtungsbereich der Walzen von einer Seite her.

Über die Enddicke des resultierenden Elektrodenbandes gibt die Druckschrift nur einen ungefähren Anhalt, wenn es dort heißt, daß das Trägernetz eine Ausgangsstärke von 0,5 bis 2,5 mm besitzt und durch das Walzen auf vorzugsweise 25 % der ursprünglichen Dicke zusammengedrückt wird.

Der Erfindung liegt die Aufgabe zugrunde, ein Verfahren zur Herstellung von positiven Bandelektroden für Wickelzellen anzugeben, welche sich durch eine verbesserte Masseausnutzung auszeichnen und insbesondere für Lithium-Systeme geeignet sind.

Die Aufgabe wird erfindungsgemäß durch ein Verfahren gelöst, wie es im Patentanspruch 1 angegeben ist.

Danach wird ein gitterförmiger Stromkollektor, welcher ein Metallnetz oder ein Streckmetall sein kann, bei einem trockenen Walzprozeß beidseitig mit dem aktiven Material beaufschlagt. Ausgehend von einer Trockenpulvermischung, die sich aus dem eigentlichen elektrochemisch aktiven Material und einem kleineren Bindemittelanteil zusammensetzt, gelingt die Aufbringung auf den Träger in der gewünschten Weise jedoch nicht auf direktem Wege, sondern erfindungsgemäß über eine vorgezogene Verarbeitung des Trockenpulvers zu Massebändern, mit denen dann ein Stromkollektor-Band in einem Aufwalzprozeß von beiden Seiten her beschichtet wird.

Zum besseren Verständnis wird der Verfahrensablauf gemäß der Erfindung anhand einer Figurendarstellung beschrieben, welche den Aufbau der zu verwendenden Walzvorrichtung zeigt.

Zu dieser Walzanlage gehören zwei Pulverzuführungen 1 zur gleichzeitigen Herstellung von zwei Massefolien. Die Pulverzuführungen bestehen aus einem Einfülltrichter, über den die Masse nach Maßgabe des Verbrauchs zunächst einer Schlagmühle 2 zugeführt wird. Als Maß und Regelgröße für den Verbrauch dient die Füllstandshöhe des Pulvers im Zuführkanal 3, die mittels Lichtschranke 4 gemessen wird, welche ihrerseits mit einer Dosiervorrichtung (Rührer im Einfülltrichter, nicht dargestellt) rückgekoppelt ist.

Die Schlagmühle zerkleinert gegebenenfalls bei der Masseherstellung entstandene Klümpchen und leitet über den Zuführkanal das Pulver dem Walzenstock 5 zu. Im Walzenstock 5 wird das Pulver komprimiert und zu einem festen Masseband bzw. zu einer Folie gewalzt. Durch Auswechseln von Walzen mit verschiedenen Durchmessern können Bänder bzw. Folien mit verschiedenen Dicken hergestellt werden. Zur Dickenkorrektur im kleineren Bereich dient eine Feineinstellung an den Walzenstöcken. Das gewalzte Masseband 6 wird von zwei Seiten über eine Gleitschiene mit Kantensteuerung 9, 10 dem Aufwalzstuhl 14 zugeführt.

Da die Zufuhr des Massebandes nicht immer synchron erfolgen muß, werden die Antriebe mittels Lichtschranken 8 abhängig von der Länge eines Bandausgleichs 7 einzeln angesteuert.

Der Stromkollektor aus netzförmigem Trägerband und/oder gestrecktem Blech wird von einer über dem Aufwalzstuhl befindlichen Spule 12 über Brems-, Umlenk- und Führungsrollen 13 in die Walzen gezogen, von beiden Seiten mit den Massebändern bzw. -folien beschichtet, und nach Abstreifen des überschüssigen Materials (Abstreifer 15) auf eine angetriebene Haspel 16 gespult. Die Zugkraft der Haspel wird durch eine Rutschkupplung auf das Elektrodenmaterial abgestimmt, um Beschädigungen zu unterbinden. Auffangbleche und eine Absaugung über der Haspel verhindern Beschädigung der Elektroden durch herabfallende Masseteilchen. Das auf die Haspel gespulte Elektrodenband kann als Coil nach dem Walzen entnommen werden. Aus dem Elektrodenband wird die Kathodenform ausgestanzt, die Kathode gegebenenfalls einer Wärmebehandlung unterzogen und für das Wickeln vorbereitet.

Nach dem neuen Walzverfahren hergestellte Elektroden verleihen Zellen, in die sie eingebaut werden, einen vergleichsweise hohen gewichtsbezogenen Energieinhalt und eine hohe Energiedichte pro Volumen. Darüber hinaus sind solche Zellen (Baugröße AA) für verschiedene Entladestromdichten einsetzbar. Wählt man bei einem Pulsentladebetrieb ein Verhältnis Entladezeit: Pausenzeit = 1 : 2, so sind die Zellen während der Entladezeiten mit bis zu 1,5 A belastbar. Selbst bei Dauerbelastung mit 100 mA fällt die für diese Zellen vorgegebene Energiedichte nur um 20 % ab.

Die erfindungsgemäß hergestellten Elektrodenbänder besitzen bei einer Dicke, die höchstens 2,00 mm, vorzugsweise jedoch nur 0,40 bis 0,20 mm erreicht, im Vergleich zu einseitig beschichteten Bändern eine größere aktive Oberfläche. Gleichzeitig werden Porositätswerte erreicht, die mindestens bei 24 %, vorzugsweise jedoch bei 28 % bis 30 % liegen. Besonders vorteilhaft lassen sich diese Walzelektroden mit negativen Gegenelektroden wie Li und H₂ kombinieren und in Primär- und Sekundärsystemen einsetzen.

Ein bevorzugtes aktives Material für die Elektrodenherstellung gemäß der Erfindung besteht aus MnO₂, FeS₂, CuO, α - Cu₂V₂O₇ oder aus LiₓMnO_{y}, wobei 1,5 < x < 2 und 2,5 < y < 3. Es kommen jedoch allgemein Oxide von Mangan, Eisen, Kupfer und Vanadium sowie Sulfide von Molybdän, Titan und Vanadium infrage.

Darüber hinaus lassen sich alle positiven Aktivmaterialien, die bei den klassischen alkalischen Akkumulatoren eingesetzt werden, nämlich Ni(OH)₂, Fe(OH)₂, Co(OH)₂ oder Zn(OH)₂, nach dem neuen Walzverfahren zu Elektroden verarbeiten. Eine vorteilhafte Anwendungsmöglichkeit dieser Technik bietet auch die Nickel/Wasserstoff-Speicherzelle.

Neben dem aktiven Material enthält die Trockenpulvermischung noch übliche geringe Mengen an PTFE als Bindemittel sowie im einen oder anderen Fall etwas Ruß.

Im folgenden sind einige Beispiele für Lithium-Wickelzellen (Baugröße AA), die mit positiven Walzelektroden gemäß der Erfindung bestückt und dann einem Entladetest unterworfen wurden, aufgeführt. Als Elektrolyt diente in allen Fällen eine Lösung von LiClO₄ in einem Propylencarbonat/Dimethoxyethan-Gemisch.

### Beispiel 1:

Das Kathodenband war hergestellt durch beidseitiges Aufwalzen einer Trockenpulvermischung aus MnO₂ mit 10 % PTFE und Ruß auf einen netzförmigen Stromkollektor.

Es besaß eine Banddicke von 0,40 mm. Seine Porosität lag bei 33 % und seine BET-Oberfläche bei 20 m²/g. Bei Pulsentladung mit 3 sec. Entladezeit bei 1,3 A und 7 sec. Pausenzeit erreichte die damit hergestellte Lithiumzelle eine spezifische Kapazität von 197 mAh/g Kathodenmasse. Mit einer Lithium-Zelle, deren Kathode durch einseitiges Beschichten (herkömmliche Walztechnik!) ihres Kollektorbandes hergestellt war und mit 0,45 mm eine ähnliche Dicke aufwies, wurde eine spezifische Kapazität von nur 180 m Ah/g Kathodenmasse ermittelt.

### Beispiel 2:

Ein gleiches Kathodenband wie gemäß Beispiel 1 wurde durch Benutzung von Walzen kleineren Durchmessers und eines engeren Spaltes auf eine Dicke von 0.30 mm heruntergewalzt. Die damit einhergehende Streckung bedingt eine Vergrößerung der geometrischen Elektrodenoberfläche um 20 %.

Eine mit dieser Kathode gebaute Lithium-Wickelzelle konnte sogar mit 1,5 A im Pulsbetrieb noch einwandfrei entladen werden, wobei die spezifische Kapazität um 5 % höher als bei der 0,40 mm dicken Elektrode lag.

Dieser Befund zeigt, daß als Folge einer Dickenreduzierung erfindungsgemäßer beidseitig beschichteter Walzelektroden die Belastbarkeit der Zelle größer wird, und zwar aufgrund der größeren Kathodenfläche bei gleichem Aktivmasseeinsatz. Die Porosität und die BET-Oberfläche -es wurden 31 % bzw. 19 m²/g gemessen; vgl. hierzu die Zahlenwerte in Beispiel 1- erfahren durch die Dickenreduzierung dagegen kaum eine Veränderung.

### Beispiel 3

Wie weitere Versuche ergaben, läßt sich das neue Walzverfahren nicht nur auf die Herstellung der Kathoden in Wickelzellen des Li/MnO₂-Primärsystems, sondern gleichermaßen auf die Kathoden der Primärsysteme LiFeS₂ oder Li/CuO, ferner der Sekundärsysteme Li/Cu₂V₂O₇ oder Li/LiₓMnO_{y} vorteilhaft übertragen. In diesen Fällen wurden Wickelzellen mit entsprechenden, erfindungsgemäß gewalzten Kathodenbändern lediglich mit einem kontinuierlichen Entladestrom von 1,3 A/Zelle (Stromdichte = 1 mA/cm²) getestet.

Nur der Übersicht halber sind nachstehend die erzielten spezifischen Stromausbeuten, wie in dem Beispiel 1 ausgedrückt durch die Kapazitätswerte pro 1 g Kathodenmasse, sowie die Dicken d der Elektroden aufgeführt.
FeS₂: 295 mAh/g; d= 0,30 mm
CuO: 278 mAh/g; d= 0,37 mm

Die BET-Oberfläche der FeS₂-Elektrode entsprach mit 20 m²/g derjenigen der 0,40 mm dicken MnO₂-Elektrode aus Beispiel 1, die Porosität betrug 24,2 %.

Eine Dickenreduzierung (d < 0,30 mm) ist notwendig bei der Herstellung von Kathodenbändern aus α - Cu₂V₂O₇ oder LiₓMnO_{y} für Sekundärsysteme. Nur dadurch ist es möglich, einen höheren spezifischen Kapazitätswert zwischen 230 und 200 mAh/g Aktivmasse und eine höhere Belastbarkeit der Zelle zu erhalten. Mit der Li/LiₓMnO_{y}-Sekundärzelle werden ca. 100 Zyklen erreicht womit jedoch die Zyklenlebenserwartung einer solchen Zelle nicht erschöpft ist, da in diesem Versuch die Lithiumelektrode in den darauffolgenden Zyklen kapazitätsbegrenzend war.

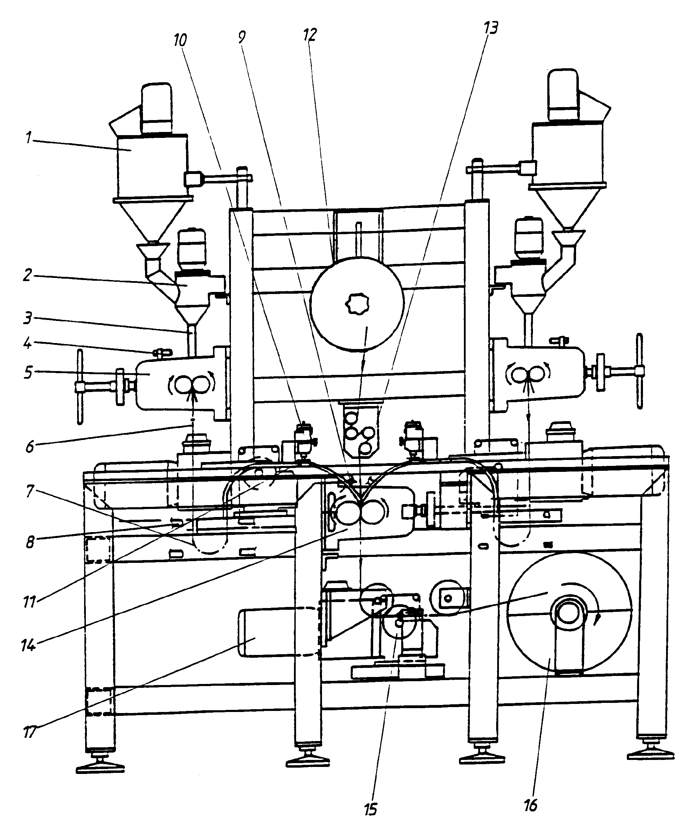

## Patentansprüche

1. Verfahren zur Herstellung einer positiven Elektrode in Bandform für Primär- und Sekundärelemente, bei dem eine Trockenpulvermischung aus dem elektrochemisch aktiven Material und einem Bindemittel mittels Walzen auf ein Metallnetz oder Streckmetall als Stromkollektor aufgebracht wird, dadurch gekennzeichnet, daß aus der Trockenpulvermischung gleichzeitig zwei Massebänder ausgewalzt werden, daß diese Massebänder von zwei Seiten her dem Spalt eines Walzenstuhles zugeführt werden, während zwischen ihnen ein gitter- oder netzförmiger Stromkollektor in den Walzenstuhl einläuft und dieser beidseitig unter Ausfüllung der Gittermaschen mit dem Material der Massebänder beschichtet wird, und daß nach Abstreifen des überschüssigen Materials das fertige Elektrodenband zur Bevorratung aufgespult wird.

2. Verfahren nach Anspruch 1, dadurch gekennzeichnet, daß das Elektrodenband auf eine Enddicke von höchstens 2,0 mm, vorzugsweise 0,2 bis 0,4 mm gewalzt wird.

3. Verfahren nach Anspruch 2, dadurch gekennzeichnet, daß die Porosität des Elektrodenbandes mindestens 24 %, vorzugsweise 28 - 30 % beträgt.

4. Verfahren nach einem der Ansprüche 1 bis 3, dadurch gekennzeichnet, daß als elektrochemisch aktives Material der Elektrode MnO₂, FeS₂ oder CuO eingesetzt wird.

5. Verfahren nach einem der Ansprüche 1 bis 3, dadurch gekennzeichnet, daß als elektrochemisch aktives Material der Elektrode α - Cu₂V₂O₇ oder LiₓMnO_{y} mit den Parametern 1,5 < x < 2 und 2,5 < y < 3 für Sekundärsysteme eingesetzt wird.

6. Verfahren nach einem der Ansprüche 1 bis 5, dadurch gekennzeichnet, daß die Enddicke der Elektrode über Meß- und Dosiereinrichtungen, die vor dem Auswalzen der Massebänder deren Bedarf an Trockenpulvermischung ermitteln und regeln, gesteuert wird.

7. Vorrichtung zur Durchführung des Verfahrens zur Herstellung einer Elektrode nach den Ansprüchen 1 bis 6, dadurch gekennzeichnet, daß sie zwei Pulverzuführungen, bestehend aus Masseeinfülltrichtern und Rührern, mit nachgeschalteten Walzenstöcken zur gleichzeitigen Herstellung von zwei Massebändern aus einer Trockenpulvermischung sowie Einrichtungen zum Dosieren des Trockenpulvers besitzt und daß sie einen Aufwalzstuhl umfaßt, in dessen Walzenspalt ein gitterförmiges Stromkollektorband gemeinsam mit den gewalzten Massebändern an je einer Seite unter Bildung eines beidseitig beschichteten Elektrodenbandes einziehbar ist und daß Einrichtungen zum Abstreifen von dem Kollektornetz anhaftender überschüssiger Masse dem Aufwalzstuhl nachgeordnet sind.

## Claims

1. Process for the production of a positive electrode in strip form for primary and secondary cells, in which a dry powder mixture comprising the electrochemically active material and a binder is applied by means of rollers to a metal netting or an expanded metal as the current collector, characterized in that two strips of mass are rolled out of the dry powder mixture at the same time, in that these strips of mass are supplied to the nip of a rolling mill from two sides, while a grid-shaped or net-shaped current collector passes into the rolling mill between them and is coated on both sides with the material of the strips of mass, filling the grid openings, and in that after excess material has been stripped off the finished electrode strip is rolled up for storage.

2. Process according to Claim 1, characterized in that the electrode strip is rolled to a final thickness of at most 2.0 mm, preferably 0.2 to 0.4 mm.

3. Process according to Claim 2, characterized in that the porosity of the electrode strip is at least 24%, preferably 28 - 30%.

4. Process according to one of Claims 1 to 3, characterized in that MnO₂, FeS₂ or CuO are used as the electrochemically active material of the electrode.

5. Process according to one of Claims 1 to 3, characterized in that α - Cu₂V₂O₇ or LiₓMnO_{y} having the parameters 1.5 < x < 2 and 2.5 < y < 3 is used for secondary systems as the electrochemically active material.

6. Process according to one of Claims 1 to 5, characterized in that the final thickness of the electrode is controlled using measuring and metering devices which, before the strips of mass are rolled out, determine and regulate the requirement thereof for dry powder mixture.

7. Apparatus for carrying out the process for producing an electrode according to Claims 1 to 6, characterized in that it has two powder supplies comprising mass charging funnels and stirrers, having downstream rolling heads for simultaneously producing two strips of mass from a dry powder mixture, and devices for metering the dry powder, and in that it includes a rolling-on mill, into the roll nip whereof a grid-shaped current collector strip can be drawn in with the rolled strips of mass, one on each side, to form an electrode strip coated on either side, and in that devices for stripping off the collector net adhering excess mass are arranged downstream of the rolling-on mill.

## Revendications

1. Procédé pour la fabrication d'une électrode positive sous forme de bande pour des éléments primaires et des éléments secondaires, procédé dans lequel, un mélange de poudre sec du matériau électro-chimiquement actif et d'un liant est rapporté par laminage sur un treillis métallique ou bien un métal déployé jouant le rôle de collecteur de courant, procédé caractérisé en ce qu'à partir du mélange de poudre sec, deux bandes de masse sont simultanément laminées, en ce que ces bandes de masse sont amenées à partir de deux côtés, à l'interstice d'un laminoir, tandis qu'entre elles, un collecteur de courant en forme de grille ou de treillis, entre dans le laminoir et est enduit des deux côtés avec remplissage des mailles de la grille par le matériau des bandes de masse, et en ce que, après l'enlèvement du matériau en excédent, la bande d'électrode terminée est bobinée pour être mise en réserve.

2. Procédé selon la revendication 1, caractérisé en ce que la bande d'électrodes est laminée à une épaisseur terminale d'au plus 2,0 mm de préférence de 0,2 à 0,4 mm.

3. Procédé selon la revendication 2, caractérisé en ce que la porosité de la bande d'électrodes est d'au moins 24 %, de préférence de 28 à 30 %.

4. Procédé selon une des revendications 1 à 3, caractérisé en ce que comme matériaux électro-chimiquement actifs de l'électrode, sont mis en oeuvre MnO₂, FeS₂ ou bien CuO.

5. Procédé selon une des revendications 1 à 3, caractérisé en ce que comme matériaux électro-chimiquement actifs de l'électrode, Â - Cu₂V₂O₇ ou bien LixMnOy avec les paramètres 1,5 < x < 2 et 2,5 < y < 3, sont mis en oeuvre pour des systèmes secondaires.

6. Procédé selon une des revendications 1 à 5, caractérisé en ce que l'épaisseur terminale de l'électrode est contrôlée par l'intermédiaire de dispositifs de mesure et de dosage qui, avant le laminage des bandes de masse, détermine et règle le besoin de celles-ci en mélange de poudre sec.

7. Dispositif pour la mise en oeuvre du procédé pour la fabrication d'une électrode selon les revendications 1 à 6, dispositif caractérisé en ce qu'il comprend deux amenées de poudre constituées par des entonnoirs d'entrée de masse ou des agitateurs, avec des étages de laminage branchés à la suite pour la fabrication simultanée de deux bandes de masse à partir d'un mélange de poudre sec, ainsi qu'avec des dispositifs pour le dosage de la poudre sèche, et en ce que le dispositif comprend un laminoir dans l'interstice duquel est susceptible d'être tirée, une bande de collecteur de courant en forme de grille conjointement avec les bandes de masse laminées placées respectivement sur chacun des côtés, en formant ainsi une bande d'électrodes enduites des deux côtés, et en ce que des dispositifs pour enlever la masse sédentaire adhérant au treillis collecteur, sont disposés à la suite du laminoir.
